# EUROPÄISCHE PATENTSCHRIFT

(11) **EP 0 467 212 B1**
(45) Veröffentlichungstag und Bekanntmachung des Hinweises auf die Patenterteilung: **15.12.1999**
(21) Anmeldenummer: 91111500.4
(22) Anmeldetag: 10.07.1991
(51) Int. Cl.: H04M 19/00, H04M 3/18

(54) **Anordnung zum Schutz einer Speiseschaltung einer Teilnehmeranschlussschaltung einer Fernmeldevermittlungsstelle gegen externe Überspannungen**
Arrangement for the protection of a feed circuit of a subscriber line circuit of a telephone exchange against external overvoltages
Disposition pour la protection d'un circuit d'alimentation d'un circuit de ligne d'abonné d'un central téléphonique contre des surtensions externes

(30) Priorität: 20.07.1990 DE 4023137
(43) Veröffentlichungstag der Anmeldung: 22.01.1992
(73) Patentinhaber: SIEMENS AKTIENGESELLSCHAFT, 80333 München (DE)
(72) Erfinder: Bronold, Joseph, Dipl.-Ing., W-8034 Germering (DE); Meyer, Oswald, Dipl.-Ing., W-8000 München 70 (DE)

(56) Entgegenhaltungen:
- EP-A- 0 291 169
- EP-A- 0 327 359
- US-A- 4 856 060

## Beschreibung

Die Erfindung betrifft eine Speiseschaltung einer Teilnehmeranschlußschaltung einer Fernmeldevermittlungsstelle. Aus der europäischen Patentanmeldung EP 0 327 359 A1 ist eine Anordnung zum Schutz einer Fernmeldevermittlungsstelle gegen externe Überspannungen bekannt, die unter anderem Stromsicherungen verwendet, um die Verbindung der Vermittlungsstelle zur Teilnehmeranschlußleitung zu unterbrechen, falls ein bestimmter Stromwert überschritten wird.

Für den Anschluß und den Betrieb eines Fernsprech-Teilnehmerapparates ist u.a. eine Speisung mit einer Versorgungsspannung notwendig (Größenordnung 50 V). Die dazu erforderliche Speiseschaltung ist symmetrisch ausgelegt und läßt zwei verschiedene Betriebsarten, nämlich hochohmige bzw. niederohmige Speisung zu, die einen jeweils unterschiedlichen Innenwiderstand aufweisen.

Die Speiseschaltung ist Teil einer Teilnehmeranschlußschaltung, wobei meherere Teilnehmeranschlußschaltungen wiederum zusammen mit einer gemeinsamen Steuerungseinheit die nächst größere Einheit, den sogenannten Anschlußmodul, bilden, der auf einer einzelnen Leiterplatte realisiert ist.

Bisher gibt es für einige Fehlerfälle, z.B. Netzspannung an der Fernsprech-Teilnehmeranschlußleitung keinen besseren Schutz für die Speiseschaltung, als das Umschalten auf hochohmiges Speisen, was nicht genügt, um den Stromfluß durch die Adern der Teilnehmerleitung z.B. bei einer externen Netzberührung ausreichend zu begrenzen, so daß nicht vorhersehbare Folgen wie Verkohlen der Leiterplatte des Anschlußmoduls und sogar Flammbildung auftraten, weshalb das gesamte Anschlußmodul ausgetauscht werden mußte. Insbesondere die verschiedenen Betriebsarten verhindern den Einsatz von Strombegrenzungen oder Stromsicherungen.

Der Erfindung liegt die Aufgabe zugrunde, einen wirksamen Schutz der Speiseschaltung einer Teilnehmeranschlußschaltung gegen externe Überspannungen bereitzustellen.

Diese Aufgabe wird durch eine Anordnung gemäß dem kennzeichnenden Merkmal des Anspruchs 1 gelöst.

Dadurch wird der Schutz der Speiseschaltung selbst dann gewährleistet, wenn diese unterschiedliche Betriebsarten aufweist.

Ein Ausführungsbeispiel der Erfindung ist anhand der Zeichnung dargestellt und wird im folgenden näher beschrieben.

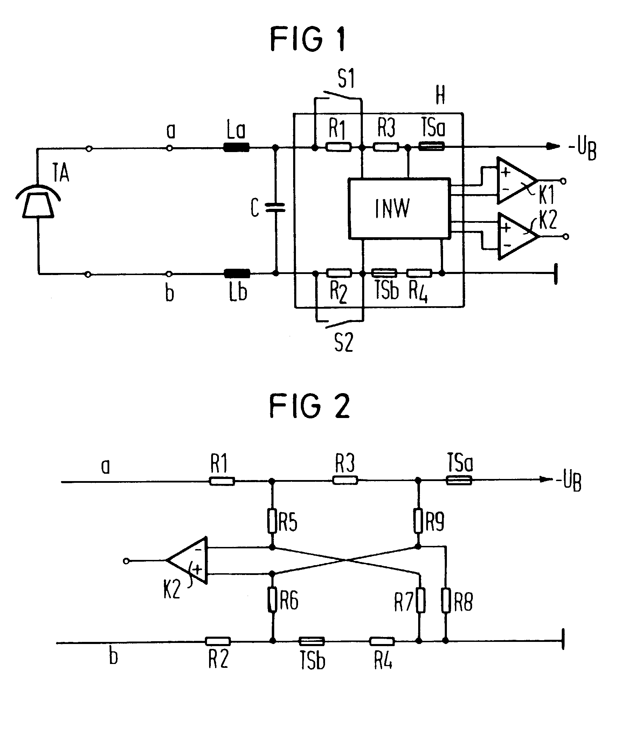

FIG 1 zeigt eine Speiseschaltung eines Teilnehmerapparates zusammen mit der erfindungsgemäßen Anordnung. FIG 2 zeigt eine spezielle Schaltungserweiterung des Indikationsnetzwerks zum Erkennen der Netzberührung.

FIG 1 zeigt in prinzipieller Weise eine Speiseschaltung eines Teilnehmerapparates TA, ein Indikationsnetzwerk INW, sowie erfindungsgemäße Thermosicherungen TSa und TSb zum Schutz der Speiseschaltung gegen externe Überspannungen. Die Speisung des Teilnehmerapparates TA erfolgt ausgehend von der Batterie mit einer Versorgungsspannung -U_{B}, über die Speiseschaltung, die Übertrager La, Lb und schließlich über die Teilnehmerleitung mit den beiden Adern a und b.

Die Speiseschaltung besteht aus Speisewiderständen R1 bis R4, einem Speisebrückenkondensator C und Schaltern S1, S2 zur Überbrückung der Speisewiderstände R1 und R2 im Falle der Umschaltung von hochohmige auf niederohmiges Speisen. Die Speiseschaltung und das Indikationsnetzwerk bilden zusammen mit einer nicht dargestellten Gabelschaltung, einem Codec und einem Filter eine Teilnehmeranschlußschaltung, wobei mehrere Teilnehmeranschlußschaltungen zusammen mit einer gemeinsamen Steuerungseinheit einen auf einer Leiterplatte realisierten Anschlußmodul bilden.

Das Indikationsnetzwerk INW dient zur Erkennung des Zustandes des Teilnehmerapparates TA, wobei z.B. die Zustände "aufgelegt", "abgehoben", oder der Fehlerfall "Erdschluß" unterschieden werden können. Die Ausgangssignale des Indikationsnetzwerks werden zwei Komparatoren K1 und K2 zugeführt, die zur Umwandlung der Darstellung der genannten Zustände in ein digitales Signalformat dienen.

Die Speisewiderstände sind zusammen mit dem Indikationsnetzwerk sowie den beiden erfindungsgemäßen Thermosicherungen auf einem gemeinsamen Träger H in Hybridtechnologie angebracht.
Die örtliche Anordnung der beiden Thermosicherungen auf dem Träger H ist so gewählt, daß die Thermosicherungen auf der der Trägerseite mit den Speisewiderständen gegenüberliegenden Trägerseite in der Weise liegen, daß die beiden elektrischen Kontaktbeinchen einer Thermosicherung, die bei Überschreiten einer bestimmten Temperatur aufbrechen, sich hinter den zu einer Ader gehörenden Speisewiderständen befinden. Die beiden Kontaktbeinchen der Thermosicherung TSa für die Ader a befinden sich also hinter den Speisewiderständen R1 und R3, und die beiden Kontaktbeinchen der Thermosicherung TSb für die Ader b hinter den Speisewiderständen R2 und R4.

Wird nun ein Speisewiderstand aufgrund externer Überspannungen heiß, so wird die Verlustwärme vom Speisewiderstand durch den Träger H zu einem dahinterliegenden Kontaktbeinchen der betreffenden Thermosicherung abgeleitet, wobei ab einer bestimmten Temperatur der Stromfluß durch die von der Überspannung betroffene Ader unterbrochen wird, da das Indikationsnetzwerk selbst sehr hochohmig ist.
Dadurch wird eine Zerstörung der betroffenen Speisewiderstände sowie des Trägers H und der Leiterplatte des Anschlußmoduls unterbunden. Im Falle einer externen Überspannung, z.B. Netzberührung, braucht somit nur die die Unterbrechung auslösende Thermosicherung bzw. der betroffene Träger H ausgetauscht werden.

Die beiden Thermosicherungen sind schaltungstechnisch so angeordnet, daß sie sich von dem Teilnehmer aus gesehen hinter den Potentialabgriffpunkten des Indikationsnetzwerks befinden. Dadurch wird es ermöglicht, daß das Indikationsnetzwerk durch eine entsprechende Schaltung gemäß FIG 2 nach dem Unterbrechen einer Ader erkennen kann, wann die externe Überspannung nicht mehr vorhanden ist.

FIG 2 zeigt eine spezielle Schaltungserweiterung des Indikationsnetzwerks zum Erkennen der Netzberührung, die dann in Funktion tritt, wenn eine oder beide Adern der Teilnehmeranschlußleitung durch das Auslösen einer oder beider Thermosicherungen unterbrochen worden ist. Die Netzspannung wird dabei über durch Widerstände R5 bis R9 gebildete Spannungsteiler den beiden Eingängen des zweiten Komparators K2 zugeführt, der dadurch im Rythmus der Netzfrequenz umschaltet. Die dadurch entstehenden Impulse werden in der Steuereinheit des Anschlußmoduls innerhalb eines bestimmten Meßintervalls hochgezählt, wobei ab einer bestimmten Anzahl von Impulsen Netzberührung registriert wird.

## Patentansprüche

1. Speiseschaltung einer Teilnehmeranschlußleitung einer Fernmeldevermittlungsstelle, mit verschiedenohmigen Speisewiderständen (R₁, ...,R₄), die im Stromkreis der Teilnehmeranschlußleitung liegen und mit entsprechenden Schaltern (S1, S2) verbunden sind, die sowohl einen hochohmigen Betrieb als auch einen niederohmigen Betrieb der Speiseschaltung ermöglichen,
**gekennzeichnet durch**
Thermosicherungen (TSa, TSb), die im Stromkreis der Teilnehmeranschlußleitung liegen und örtlich gegenüber den Speisewiderständen so plaziert sind, daß sie durch die in den Speisewiderständen produzierte Verlustwärme erhitzt werden und dadurch den Stromfluß auf der Teilnehmeranschlußleitung ab einer bestimmten durch die genannte Verlustwärme bedingten Temperatur unterbrechen.

2. Speiseschaltung nach Patentanspruch 1, **dadurch gekennzeichnet**, daß
a) bestimmte Schaltungspunkte durch ein Indikationsnetzwerk (INW) abgegriffen werden, das zur Erkennung der an diesen Schaltungspunkten anliegenden Potentialverhältnissen dient,
b) das Indikationsnetzwerk so ausgestattet ist, daß es nach der Unterbrechung einer Ader (a oder b) der Teilnehmerleitung das Anliegen einer externen Überspannung auf dieser Ader erkennen kann,
c) die durch das Indikationsnetzwerk abgegriffenen bestimmten Schaltungspunkte so angeordnet sind, daß sie von dem Teilnehmer aus gesehen vor den Unterbrechungspunkten liegen.

3. Speiseschaltung nach Anspruch 1 oder 2,
**dadurch gekennzeichnet**, daß
a) die Thermosicherungen und die Speisewiderstände auf einem gemeinsamen Träger (H) angebracht sind,
b) die Thermosicherungen auf der den Speisewiderständen gegenüberliegenden Trägerseite jeweils direkt hinter den Speisewiderständen liegen.

## Claims

1. Supply circuit of a subscriber access line to a telecommunications exchange, having supply resistors (R₁,...,R₄) of various values which are located in the circuit of the subscriber access line and are connected to corresponding switches (S1, S2) which allow both high-impedance operation and low-impedance operation of the supply circuit,
characterized by
thermal fuses (TSa, TSb) which are located in the circuit of the subscriber access line and are positioned physically with respect to the supply resistors such that they are heated by the heat losses produced in the supply resistors and, in consequence, interrupt the current flow on the subscriber access line above a specific temperature, which is dependent on the said heat losses.

2. Supply circuit according to Patent Claim 1, characterized in that
a) specific circuit points are tapped by an indication network (INW) which is used to identify the potential conditions which are present at these circuit points,
b) the indication network is equipped such that, after the interruption of one conductor (a or b) in the subscriber line, it can identify the presence of an external overvoltage on this conductor,
c) the specific circuit points which are tapped by the indication network are arranged such that they are located, as seen by the subscriber, upstream of the interruption points.

3. Supply circuit according to Claim 1 or 2, characterized in that
a) the thermal fuses and the supply resistors are fitted on a common base (H)
b) the thermal fuses are in each case located directly behind the supply resistors on the side of the base opposite the supply resistors.

## Revendications

1. Circuit d'alimentation d'une ligne de raccordement d'abonné d'un central téléphonique, comportant des résistances (R₁ ...., R₄) d'alimentation de valeurs ohmiques diverses qui se trouvent dans le circuit de courant de la ligne de raccordement d'abonné et qui sont reliées à des interrupteurs (S1, S2) correspondants qui permettent aussi bien un fonctionnement à haute impédance qu'un fonctionnement à basse impédance du circuit d'alimentation,
caractérisé par
des thermofusibles (TSa, TSb) qui se trouvent dans le circuit de courant de la ligne de raccordement d'abonné et qui sont placés par rapport aux résistances d'alimentation à un endroit tel qu'ils sont chauffés par la chaleur dissipée produite dans les résistances d'alimentation et qu'ils interrompent le flux de courant sur la ligne de raccordement d'abonné à partir d'une température déterminée, conditionnée par ladite chaleur dissipée.

2. Circuit d'alimentation suivant la revendication 1, caractérisé en ce que
a) des points de circuit déterminés sont analysés par un système (INW) d'indication, qui sert à reconnaître les conditions de potentiel s'appliquant à ces points de circuit,
b) le système d'indication est équipé de manière à pouvoir reconnaître, après l'interruption d'un brin (a ou b) de la ligne d'abonné, l'application d'une surtension externe à ce brin,
c) les points de circuit déterminés analysés par le système d'indication sont disposés de manière à se trouver en amont des points d'interruption vus à partir de l'abonné.

3. Circuit d'alimentation suivant la revendication 1 ou 2, caractérisé en ce que
a) les thermofusibles et les résistances d'alimentation sont montés sur un support H commun,
b) les thermofusibles se trouvent sur la face du support faisant face aux résistances d'alimentation, chacun directement en aval des résistances d'alimentation.
